# EUROPEAN PATENT APPLICATION

(11) **EP 4 738 586 A1**
(43) Date of publication of application: **06.05.2026**
(21) Application number: 24831034.4
(22) Date of filing: 28.06.2024
(51) Int. Cl.: H01M 50/342, H01M 10/04, H01M 6/00

(54) **EXPLOSION-PROOF VALVE, BATTERY AND PROCESSING METHOD FOR EXPLOSION-PROOF VALVE**

(30) Priority: 28.06.2023 CN 202310783400
(71) Applicant: SVOLT Energy Technology Co., Ltd., Changzhou, Jiangsu 213200 (CN)
(72) Inventor: MA, Yonggui, hangzhou, Jiangsu 213200 (CN)
(74) Representative: Michalski Hüttermann & Partner Patentanwälte mbB
(86) International application number: PCT/CN2024/102567
(87) International publication number: WO 2025/002408

(57) **Abstract**

The present application relates to the technical field of batteries, and discloses an explosion-proof valve, a battery, and a processing method for an explosion-proof valve. The explosion-proof valve includes: an explosion-proof valve body suitable for being arranged on a housing of a battery; a thinned area surrounding the circumference of the explosion-proof valve body, where the thickness of the thinned area is less than that of the explosion-proof valve body; an explosion rib arranged in the thinned area, where the thickness of the explosion rib is less than the thickness of the thinned area, and the explosion rib is suitable for breaking at a preset pressure value; and a plurality of pits spaced apart from each other in the thinned area and spaced apart from the explosion rib to reduce stress in the thinned area. When the gas pressure value inside the battery reaches the preset pressure value, the explosion rib first breaks to form an exhaust channel, facilitating the discharge of high-pressure gas inside the battery. The pits in the thinned area can destroy the crystal structure on the surface of the thinned area, thereby relieving some stress, solving the problem of high stress in the forming process of the explosion-proof valve, and preventing structural deformation or break.

## Description

### CROSS REFERENCE TO RELATED APPLICATION

The present application claims priority to Chinese Patent Application No. 202310783400.3 filed with the China National Intellectual Property Administration on June 28, 2023, and entitled "EXPLOSION-PROOF VALVE, BATTERY, AND PROCESSING METHOD FOR EXPLOSION-PROOF VALVE", which is incorporated herein by reference in entirety.

### TECHNICAL FIELD

The present application relates to the technical field of batteries, and specifically relates to an explosion-proof valve, a battery, and a processing method for an explosion-proof valve.

### BACKGROUND ART

To ensure battery safety, most batteries currently on the market are provided with an explosion-proof valve on their housing. When the gas pressure inside the battery is excessively high, the explosion-proof valve opens to prevent battery explosion. Commonly, the explosion-proof valve is formed separately and laser-welded to a through hole formed on a cover plate to form a whole. However, such a structural form decreases local strength of the cover plate, thereby affecting the explosion value of the explosion-proof valve of the entire battery, making it difficult to ensure battery safety.

To solve the above problem, an integral explosion-proof valve technology is employed in the prior art to form an explosion-proof valve on a bare aluminum sheet through stretching and thinning. However, high stress is generated in the integral forming process, resulting in structural deformation and even a risk of structural break, which will affect the safety of the explosion-proof valve.

### SUMMARY

In view of this, the present application provides an explosion-proof valve, a battery, and a processing method for an explosion-proof valve to solve the problem of high stress in the forming process of explosion-proof valves.

In a first aspect, the present application provides an explosion-proof valve, including: an explosion-proof valve body suitable for being arranged on a housing of a battery; a thinned area surrounding the circumference of the explosion-proof valve body, where the thickness of the thinned area is less than that of the explosion-proof valve body; an explosion rib arranged in the thinned area, where the thickness of the explosion rib is less than that of the thinned area, and the explosion rib is suitable for breaking at a preset pressure value; and a plurality of pits spaced apart from each other in the thinned area and spaced apart from the explosion rib to reduce stress in the thinned area.

Beneficial effect: The housing is pressed to form the thinned area on the circumference of the explosion-proof valve body, the thickness of the thinned area is less than that of other areas on the housing, and the strength of the thinned area is less than that of other areas on the housing, so the thinned area with lower strength forms an explosion area of the explosion-proof valve. In addition, the thickness of the explosion rib arranged in the thinned area is less than the overall thickness of the thinned area, so the thickness of a solid portion corresponding to the explosion rib is minimum, and the strength at the explosion rib is minimum. When the gas pressure value inside the battery reaches the preset pressure value, the explosion rib first breaks, so that the explosion-proof valve body surrounded by the explosion rib can be opened to form an exhaust channel, facilitating the discharge of high-pressure gas inside the battery, preventing battery explosion, and reducing losses. Meanwhile, the plurality of spaced pits in the thinned area can destroy the crystal structure on the surface of the thinned area, thereby relieving some stress, solving the problem of high stress in the forming process of the explosion-proof valve, preventing a risk of structural deformation or break, and thus improving the safety of the explosion-proof valve.

In an optional implementation, the thickness of the thinned area is H1, and the depth of the pit is H2, where H2≥1/2*H1.

Beneficial effect: Designing the depth H2 of the pit to be greater than or equal to half of the thickness H1 of the thinned area can ensure that the pits are sufficient to destroy the crystal structure inside the material of the thinned area, thereby reducing stress, reducing the processing difficulty in the thinned area, and ensuring the structural stability.

In an optional implementation, the thickness H1 of the thinned area ranges from 0.2 mm to 0.5 mm.

Beneficial effect: Designing the thickness H1 of the thinned area within the range of 0.2 mm to 0.5 mm can not only ensure the structural strength of the thinned area, but also ensure the timely opening of the explosion-proof valve and lower processing costs.

In an optional implementation, the plurality of pits are symmetrically distributed on both sides of the explosion rib; and/or
the distance L1 between the two adjacent pits along the circumference of the explosion-proof valve body is 0.2 mm to 1 mm.

Beneficial effect: The symmetrical distribution of the plurality of pits on both sides of the explosion rib increases the quantity of pits, thereby increasing the effect of relieving stress. The layout of symmetrical distribution is simple and attractive, is also conducive to increasing the stability of the overall structure, and facilitates processing. Designing the distance L1 between the two adjacent pits to be 0.2 mm to 1 mm not only facilitates processing, but also can ensure complete stress relief.

In an optional implementation, the circumferential surface of the explosion-proof valve body is an inclined surface at an angle to the axis of the explosion-proof valve body; and/or
the width L2 of the thinned area ranges from 0.5 mm to 5 mm.

Beneficial effect: The inclined surface is inclined away from the thinned area, so that the corresponding portion of the thinned area is shaped like an outward opening bell mouth that, on the one hand, facilitates processing, and on the other hand, controls the flow direction of the material in the pressing process of the thinned area, and the pressed material flows towards the inclined side, thereby preventing material accumulation and achieving the purpose of stress relief. Designing the width L2 of the thinned area within the range of 0.5 mm to 5 mm not only facilitates the subsequent processing of the explosion rib and the pits, but also can lower the cost.

In an optional implementation, the thinned area further includes a connecting portion, the connecting portion and the explosion rib are connected end to end, and the connecting portion surrounds the explosion-proof valve body, and the dimension L3 of the connecting portion along the circumference of the explosion-proof valve body is 2 mm to 20 mm.

Beneficial effect: Since the strength of the connecting portion is greater than that of the explosion rib, when the gas pressure inside the battery reaches the preset pressure value and the explosion rib breaks, the connecting portion will not break, which can prevent the entire explosion-proof valve body from exploding and popping out to cause secondary damage to the surrounding battery or other structures, thereby reducing danger. Designing L3 between 2 mm and 20 mm can ensure that the explosion-proof valve body will not pop out as a whole, and also ensure that the explosion-proof valve opens in a timely manner.

In an optional implementation, the explosion-proof valve further includes a boss surrounding the circumference of the thinned area, and the upper surface of the boss is higher than the upper surface of the explosion-proof valve body and the upper surface of the thinned area.

Beneficial effect: By designing the boss along the circumference of the thinned area on the side away from the explosion-proof valve body, the strength of the housing where the explosion-proof valve is arranged is increased, and the stability of the overall structure is enhanced.

In a second aspect, the present application further provides a battery, including: a housing with an open end; an electrode set mounted in the housing; and a cover plate arranged at the open end of the housing to close the housing, where the foregoing explosion-proof valve is configured on the cover plate.

Beneficial effect: The explosion-proof valve is integrally formed on the cover plate, so the product structure is simple and easy to form and facilitates processing. In addition, compared to conventional welding methods, the integral forming method can increase the strength of the cover plate and reduce the impact of the weak strength of the cover plate on the explosion value of the explosion-proof valve. Moreover, the design of the pits on the explosion-proof valve and the blank areas in the middle and bottom of the explosion-proof valve increase the flow space of the product, thereby achieving the purpose of stress relief and increasing structural reliability. Meanwhile, the boss on the explosion-proof valve is higher than the upper surface of the cover plate, which can reduce the risk of residual electrolyte entering the explosion-proof valve during injection and increase the safety of the battery.

In a third aspect, the present application further provides a processing method for an explosion-proof valve, the processing method being used to process the foregoing explosion-proof valve, and the processing method including: selecting a first area on the housing, and shaping the first area upwards so that the first area protrudes upwards relative to other areas of the housing, to form a raised area; pressing a ring-shaped area downwards along the circumference of the raised area to form the thinned area, where the ring-shaped area is spaced by a first preset distance from the edge of the raised area; processing the plurality of spaced pits in the thinned area to destroy the crystal structure inside the material of the thinned area; and pressing an indentation of a preset width along the circumference of the thinned area to form the explosion rib, where in the pressing process, the excess material flows freely towards both sides of the explosion rib.

Beneficial effects: By carrying out the above method steps, the explosion-proof valve can be obtained. Compared to conventional steps such as stamping, cleaning, annealing, and welding, the processing method for the explosion-proof valve in this embodiment only requires stamping to form the explosion-proof valve, thereby reducing the forming process of the product and thus lowering costs. In the forming process of the explosion-proof valve, not only are the pits formed to destroy the crystal structure of the material, but also sufficient flow space is provided for the excess material, thereby facilitating stress relief, preventing the thinned area from breaking due to excessive stress, and improving the strength and stability of the explosion-proof valve.

In an optional implementation, the distance of upward movement of the raised area relative to other areas on the housing is H3, where H3 ranges from 0.3 mm to 2 mm.

Beneficial effect: Designing the distance H3 of upward movement of the raised area relative to other areas on the housing to be 0.3 mm to 2 mm can ensure sufficient material flow space and sufficient strength of the boss, thereby increasing the stability of the overall structure.

### BRIEF DESCRIPTION OF DRAWINGS

To describe the technical solutions in the embodiments of the present application or in the prior art more clearly, the following briefly describes the accompanying drawings required for describing the specific embodiments or the prior art. Apparently, the accompanying drawings in the following description show merely some embodiments of the present application, and a person of ordinary skill in the art can still derive other drawings from these drawings without inventive efforts.
FIG. 1 is a schematic structural diagram of a cover plate according to an embodiment of the present application;
FIG. 2 is a partially enlarged schematic diagram of an explosion-proof valve area of the cover plate shown in FIG. 1;
FIG. 3 is a partially enlarged schematic diagram of A in FIG. 2;
FIG. 4 is a schematic structural diagram of an explosion-proof valve in another shape according to an embodiment of the present application;
FIG. 5 is a schematic structural diagram of an explosion-proof valve in still another shape according to an embodiment of the present application;
FIG. 6 is a schematic structural diagram of the cover plate according to an embodiment of the present application after a first step of a processing method for an explosion-proof valve;
FIG. 7 is a schematic structural diagram of the cover plate in FIG. 6 after a second step of the processing method for an explosion-proof valve;
FIG. 8 is a partially enlarged schematic diagram of B in FIG. 7;
FIG. 9 is a schematic structural diagram of the cover plate in FIG. 7 after a third step of the processing method for an explosion-proof valve;
FIG. 10 is a partially enlarged schematic diagram of C in FIG. 9;
FIG. 11 is a schematic structural diagram of the cover plate in FIG. 9 after a fourth step of the processing method for an explosion-proof valve; and
FIG. 12 is a partially enlarged schematic diagram of D in FIG. 11.

### Reference numerals:

1. Explosion-proof valve; 101. Explosion-proof valve body; 102. Thinned area; 1021. Connecting portion; 103. Explosion rib; 104. Pit; 105. Boss; 201. Positive electrode column; 202. Negative electrode column; 3. Liquid injection hole; 4. Cover plate; 401. Raised area.

### DETAILED DESCRIPTION OF EMBODIMENTS

In order to make the objectives, technical solutions, and advantages of the embodiments of the present application clearer, the technical solutions in the embodiments of the present application will be clearly and completely described below in conjunction with the accompanying drawings in the embodiments of the present application. Apparently, the described embodiments are merely some of the embodiments of the present application, not all of them. Based on the embodiments of the present application, all other embodiments obtained by those skilled in the art without any inventive efforts fall within the scope of protection of the present application.

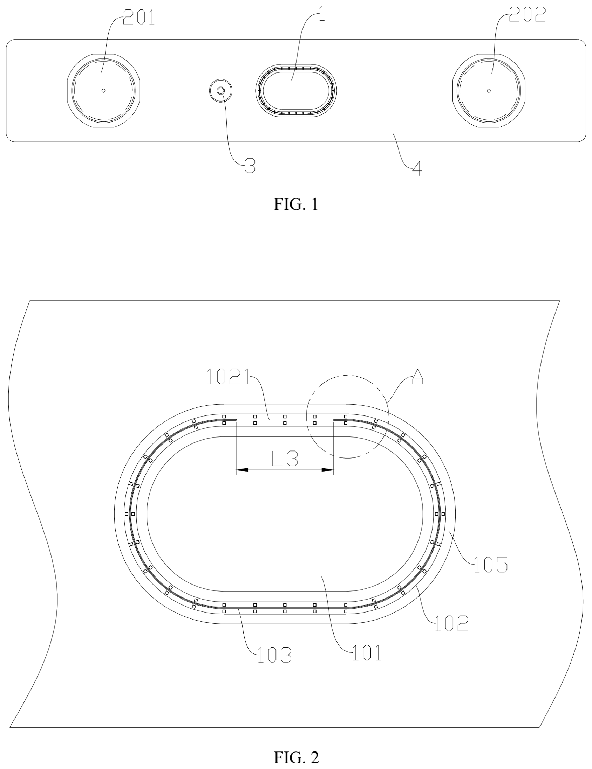

Hereinafter, the embodiments of the present application will be described in conjunction with FIG. 1 to FIG. 12.

According to the embodiments of the present application, in one aspect, an explosion-proof valve is provided, mainly including: an explosion-proof valve body 101, a thinned area 102, an explosion rib 103, and a plurality of pits 104.

Specifically, the explosion-proof valve body 101 is suitable for being arranged on a housing of a battery; the thinned area 102 surrounds the circumference of the explosion-proof valve body 101, and the thickness of the thinned area 102 is less than that of the explosion-proof valve body 101; the explosion rib 103 is arranged in the thinned area 102, the thickness of the explosion rib 103 is less than that of the thinned area 102, and the explosion rib 103 is suitable for breaking at a preset pressure value; and the plurality of pits 104 are spaced apart from each other in the thinned area 102 and spaced apart from the explosion rib 103 to reduce stress in the thinned area 102.

By applying the explosion-proof valve of this embodiment, the housing is pressed to form the thinned area 102 on the circumference of the explosion-proof valve body 101, the thickness of the thinned area 102 is less than that of other areas on the housing, and the strength of the thinned area 102 is less than that of other areas on the housing, so the thinned area 102 with lower strength forms an explosion area of the explosion-proof valve. In addition, the thickness of the explosion rib 103 arranged in the thinned area 102 is less than the overall thickness of the thinned area 102, so the thickness of a solid portion corresponding to the explosion rib 103 is minimum, and the strength at the explosion rib 103 is minimum. When the gas pressure value inside the battery reaches the preset pressure value, the explosion rib 103 first breaks, so that the explosion-proof valve body 101 surrounded by the explosion rib 103 can be opened to form an exhaust channel, facilitating the discharge of high-pressure gas inside the battery, preventing battery explosion, and reducing losses. Meanwhile, the plurality of spaced pits 104 in the thinned area 102 can destroy the crystal structure on the surface of the thinned area 102, thereby relieving some stress, solving the problem of high stress in the forming process of the explosion-proof valve 1, preventing a risk of structural deformation or break, and thus improving the safety of the explosion-proof valve 1.

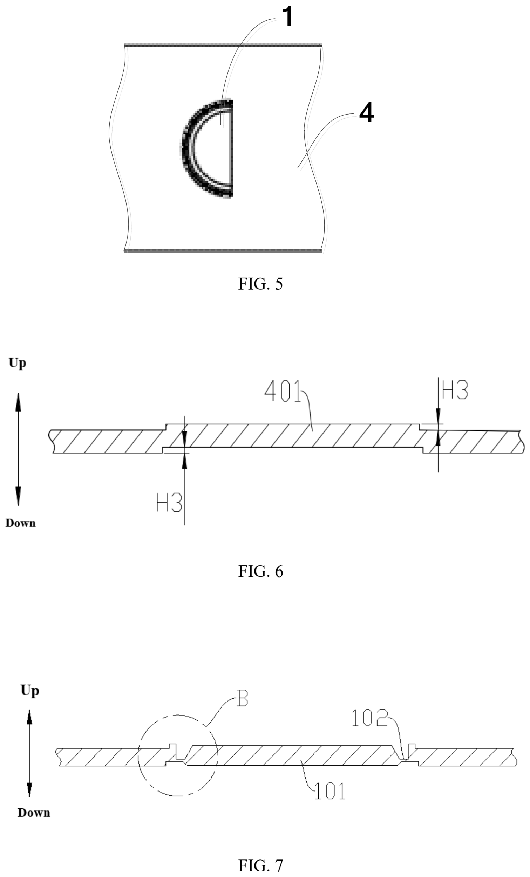

It should be noted that the explosion-proof valve 1 is applied to batteries. The explosion-proof valve 1, which is arranged on the surface of the battery, explodes to discharge the gas inside the battery when the gas pressure inside the battery reaches a certain value, thereby preventing battery explosion due to excessive pressure. The housing of the battery may be a cover plate 4 that constitutes the battery, or a shell of the battery. The thickness refers to a dimension in a direction perpendicular to the surface of the housing, as indicated by "up-down" arrows in FIG. 6 to FIG. 12. The thinned area 102 is formed by thinning a portion of the housing, which can be achieved through pressing. Optionally, the thinned area 102 is formed through pressing on the cover plate 4, that is, the thinned area 102 is integrally formed with the cover plate 4. Therefore, the forming method is simple, facilitates processing, and can improve the strength of the cover plate 4. The thinned area 102 surrounds the explosion-proof valve body 101, and when the explosion rib 103 in the thinned area 102 breaks, the explosion-proof valve body 101 opens relative to the housing, where the thinned area 102 may be a closed ring surrounding the explosion-proof valve body 101 or a portion of the ring. The preset pressure value is an explosion value of the explosion-proof valve 1. When the gas pressure inside the battery reaches the preset pressure value, the explosion rib 103 breaks. The pits 104 are small concave points relative to the thinned area 102. The pits 104 are arranged on the upper surface of the thinned area 102 to eliminate certain stress on the thinned area 102. The upper surface refers to a surface of the housing that faces the outside of the battery, and also refers to a surface indicated by "up" arrows in FIG. 6 to FIG. 12.

Specifically, the shape of the pits 104 is not fixed and may be one or several shapes such as circle, square, rectangle, or trapezoid. Such a structure is simple and easy to process.

In one embodiment, the thickness of the thinned area 102 is H1, and the depth of the pit 104 is H2, where H2≥1/2*H1. With further reference to FIG. 7 to FIG. 10, the thickness of the thinned area 102 and the depth of the pit 104 refer to their respective dimensions in the "up-down" direction. If the depth of the pit 104 is less than half of the thickness of the thinned area 102, the pits 104 are too shallow to destroy the crystal structure inside the material of the thinned area 102, and the processing difficulty is high, affecting structural stability. Therefore, designing the depth H2 of the pit 104 to be greater than or equal to half of the thickness H1 of the thinned area 102 can ensure that the pits 104 are sufficient to destroy the crystal structure inside the material of the thinned area 102, thereby reducing stress, reducing the processing difficulty in the thinned area, and ensuring the structural stability.

In one embodiment, the thickness H1 of the thinned area 102 ranges from 0.2 mm to 0.5 mm. If the thickness H1 of the thinned area 102 is less than 0.2 mm, the thinned area 102 is too thin, making it difficult to ensure the structural strength of the thinned area 102 and difficult to process, and increasing processing costs. If the thickness H1 of the thinned area 102 is greater than 0.5 mm, the thinned area 102 is too thick, the strength of the thinned area 102 correspondingly increases, and the gas pressure required for the explosion of the explosion-proof valve 1 increases, which affects the timely opening of the explosion-proof valve 1 and thus affects the safety of the battery. Moreover, the excessive thickness of the thinned area 102 will increase the difficulty of processing the explosion rib 103 in the later stage, resulting in an increase in processing costs. Therefore, designing the thickness H1 of the thinned area 102 within the range of 0.2 mm to 0.5 mm can not only ensure the structural strength of the thinned area 102, but also ensure the timely opening of the explosion-proof valve 1 and lower processing costs. Optionally, the thickness H1 of the thinned area 102 is 0.3 mm.

In one embodiment, the plurality of pits 104 are symmetrically distributed on both sides of the explosion rib 103. Both sides of the explosion rib 103 refer to two sides of the explosion rib 103 in a width direction within a plane where the surface of the housing is located, i.e., two sides of the ring formed by the thinned area 102 in a radial direction. Specifically, the plurality of pits 104 are distributed on both sides of the explosion rib 103. The plurality of pits 104 on the same side of the explosion rib 103 are evenly spaced around the circumference of the explosion-proof valve body 101. That is, a line connecting the plurality of pits 104 on the same side of the explosion rib 103 forms a concentric ring with the explosion rib 103. Therefore, the structure is compact and facilitates processing. The symmetrical distribution of the plurality of pits 104 on both sides of the explosion rib 103 increases the quantity of pits 104, thereby increasing the effect of relieving stress. The layout of symmetrical distribution is simple and attractive, is also conducive to increasing the stability of the overall structure, and facilitates processing. Specifically, the pits 104 on both sides of the explosion rib 103 are equal in quantity.

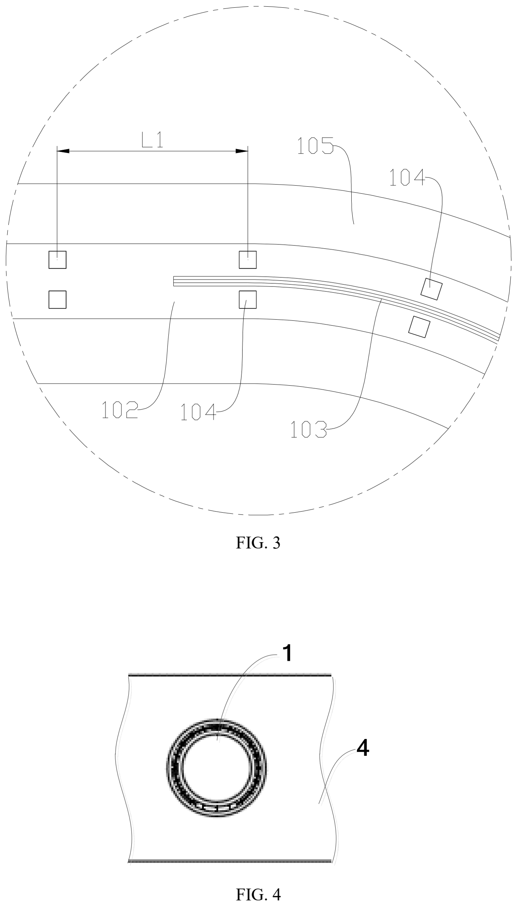

In one embodiment, the distance L1 between the two adjacent pits 104 along the circumference of the explosion-proof valve body 101 is 0.2 mm to 1 mm. Furthermore, as shown in FIG. 3, the plurality of pits 104 are evenly spaced along the circumference of the explosion-proof valve body 101 in the same circle. If the distance L1 between the two adjacent pits 104 is less than 0.2 mm, i.e., if the distance between the two adjacent pits 104 is too short and the pits 104 in the thinned area 102 are too dense, the forming process becomes unfeasible. If the distance L1 between the two adjacent pits 104 is greater than 1 mm, i.e., if the distance between the two adjacent pits 104 is too long and the pits 104 in the thinned area 102 are too sparse, complete stress relief cannot be achieved. Therefore, designing the distance L1 between the two adjacent pits 104 to be 0.2 mm to 1 mm not only facilitates processing, but also can ensure complete stress relief.

In one embodiment, the circumferential surface of the explosion-proof valve body 101 is an inclined surface at an angle to the axis of the explosion-proof valve body. Furthermore, as shown in FIG. 7 to FIG. 12, the circumferential surface of the explosion-proof valve body 101 is connected to the thinned area 102. The connection surface is designed as an inclined surface that is inclined away from the thinned area 102, so that the corresponding portion of the thinned area 102 is shaped like an outward opening bell mouth that, on the one hand, facilitates processing, and on the other hand, controls the flow direction of the material in the pressing process of the thinned area 102, and the pressed material flows towards the inclined side, thereby preventing material accumulation and achieving the purpose of stress relief. Specifically, the upper surface of the thinned area 102 is lower than the upper surface of the explosion-proof valve body 101, and the lower surface of the thinned area 102 is higher than the lower surface of the explosion-proof valve body 101. That is, the upper surface of the thinned area 102 is located relatively below the upper surface of the explosion-proof valve body 101, and the lower surface of the thinned area 102 is located relatively above the lower surface of the explosion-proof valve body 101. The connection surfaces between the thinned area 102 on both sides in the up-down direction and the explosion-proof valve body 101 are inclined surfaces, where the upper refers to a direction indicated by the "up" arrow in FIG. 7 to FIG. 12, and the lower refers to a direction indicated by the "down" arrow in FIG. 7 to FIG. 12.

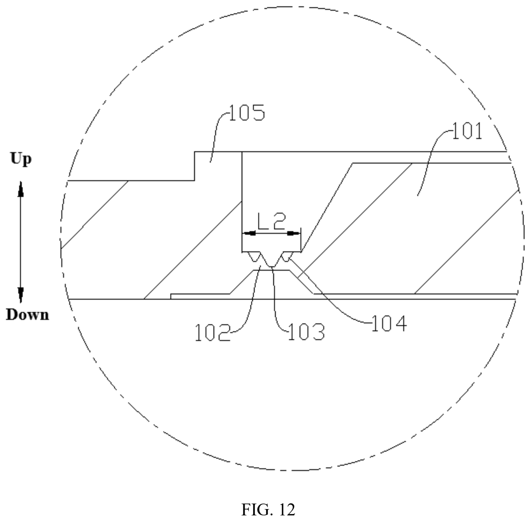

In one embodiment, the width L2 of the thinned area 102 ranges from 0.5 mm to 5 mm. Furthermore, as shown in FIG. 12, the width of the thinned area 102 refers to a radial dimension on the ring where the thinned area 102 is located. If the width L2 of the thinned area 102 is less than 0.5 mm, the thinned area 102 is too small and inconvenient for the subsequent processing of the explosion rib 103 and the pits 104, resulting in insufficient strength of a forming punch in the subsequent process, which will affect normal production. If the width L2 of the thinned area 102 is greater than 5 mm, the thinned area 102 is too large, the pressure required for pressing is relatively high, the requirement for a processing mold is high, and the cost is high. Therefore, designing the width L2 of the thinned area 102 within the range of 0.5 mm to 5 mm not only facilitates the subsequent processing of the explosion rib 103 and the pits 104, but also can lower the cost.

In one embodiment, the thinned area 102 further includes a connecting portion 1021, the connecting portion 1021 and the explosion rib 103 are connected end to end, and the connecting portion 1021 surrounds the explosion-proof valve body 101, and the dimension L3 of the connecting portion 1021 along the circumference of the explosion-proof valve body 101 is 2 mm to 20 mm. Furthermore, as shown in FIG. 2, the connecting portion 1021 and the explosion rib 103 are connected end to end to form a closed ring. The connecting portion 1021 is a portion of the thinned area 102 where the explosion rib 103 is not arranged. Therefore, the strength of the connecting portion 1021 is greater than that of the explosion rib 103. When the gas pressure inside the battery reaches the preset pressure value and the explosion rib 103 breaks, the connecting portion 1021 will not break, which can prevent the entire explosion-proof valve body 101 from exploding and popping out to cause secondary damage to the surrounding battery or other structures, thereby reducing danger. The dimension L3 of the connecting portion 1021 along the circumference of the explosion-proof valve body 101 is the length of the portion of the thinned area 102 on the ring where the explosion rib 103 is not arranged. If L3 is less than 2 mm, the connecting portion 1021 is too small to ensure the connection strength, and when the explosion rib 103 breaks, the connecting portion 1021 may also break under the impact of high-pressure gas, increasing the risk. If L3 is greater than 20 mm, the connecting portion 1021 is too large, the explosion rib 103 is too small, and when the explosion rib 103 breaks, the explosion-proof valve body 101 cannot be opened, affecting the exhaust effect and increasing the risk of battery explosion. Therefore, designing L3 between 2 mm and 20 mm can ensure that the explosion-proof valve body 101 will not pop out as a whole, and also ensure that the explosion-proof valve 1 opens in a timely manner. Specifically, the dimension of the connecting portion 1021 is determined based on the size of the explosion-proof valve 1.

In one embodiment, the explosion-proof valve further includes a boss 105 surrounding the circumference of the thinned area 102, and the upper surface of the boss 105 is higher than the upper surface of the explosion-proof valve body 101 and the upper surface of the thinned area 102. Specifically, the boss 105 is located on the upper surface of the housing and on a side of the thinned area 102 away from the explosion-proof valve body 101 within that plane. By designing the boss 105 along the circumference of the thinned area 102 on the side away from the explosion-proof valve body 101, the strength of the housing where the explosion-proof valve 1 is arranged is increased, and the stability of the overall structure is enhanced.

According to the embodiments of the present application, in another aspect, a battery is further provided, including a housing, an electrode set, and a cover plate 4. The housing has an open end; the electrode set is mounted in the housing; the cover plate 4 is arranged at the open end of the housing to close the housing, and the foregoing explosion-proof valve 1 is configured on the cover plate 4. Specifically, the explosion-proof valve 1 is integrally formed on the cover plate 4, so the product structure is simple and easy to form and facilitates processing. In addition, compared to conventional welding methods, the integral forming method can increase the strength of the cover plate 4 and reduce the impact of the weak strength of the cover plate 4 on the explosion value of the explosion-proof valve 1. Moreover, the design of the pits 104 on the explosion-proof valve 1 and the blank areas in the middle and bottom of the explosion-proof valve 1 increase the flow space of the product, thereby achieving the purpose of stress relief and increasing structural reliability. Meanwhile, the boss 105 on the explosion-proof valve 1 is higher than the upper surface of the cover plate 4, which can reduce the risk of residual electrolyte entering the explosion-proof valve 1 during injection and increase the safety of the battery.

Optionally, the cover plate 4 is further provided with a positive electrode column 201 and a negative electrode column 202 spaced apart from each other, the positive electrode column 201 is electrically connected to a positive electrode of the electrode set, and the negative electrode column 202 is electrically connected to a negative electrode of the electrode set.

Optionally, the cover plate 4 is further provided with a liquid injection hole 3, and the liquid injection hole 3 penetrates the cover plate 4 to inject electrolyte into the battery.

Optionally, the cover plate 4 is made of an imported material or a domestic 3 series aluminum material, which has good quality and high strength and is conducive to improving the safety of the entire battery.

In one embodiment, the explosion-proof valve 1 is waist-shaped as shown in FIG. 1 and FIG. 2, and the connecting portion 1021 is arranged in a local area of the straight portion of the waist shape. Such a structure is reasonable and facilitates processing.

Moreover, in other embodiments, the explosion-proof valve 1 may be circular as shown in FIG. 4. In this case, the connecting portion 1021 is located in a partial area on the circumference, which also facilitates processing and makes the explosion-proof valve 1 easy to open.

Moreover, in other embodiments, the explosion-proof valve 1 may be semicircular as shown in FIG. 5. In this case, the connecting portion 1021 is a diameter portion of the semicircle.

It should be noted that the conventional processing method of welding an explosion-proof plate to a bare aluminum sheet to form an explosion-proof valve usually includes the following steps: stamping, cleaning, annealing, and welding. The malfunction in any of the steps may result in the failure of the explosion-proof valve; and the numerous steps involved in the product invisibly increases manufacturing costs, thereby affecting the competitiveness of the product.

According to the embodiments of the present application, in another aspect, a processing method for an explosion-proof valve is further provided. The processing method is used for processing the foregoing explosion-proof valve 1, and the processing method specifically includes the following steps:
Step S101: Select a first area on the housing, and shape the first area upwards so that the first area protrudes upwards relative to other areas of the housing, to form a raised area 401.

The housing is preferably the cover plate 4, and the first area is an area used for processing the explosion-proof valve 1. Furthermore, as shown in FIG. 6, shaping the first area upwards refers to forming a convex hull by the first area relative to the body of the cover plate 4 as indicated by the "up" arrow in FIG. 6, in order to increase the strength of the cover plate 4 and the flow space for the subsequently processed product.

Specifically, the raised area 401 is stamped from the first region, with simple operation, mature technology, and high reliability.

Step S102: Press a ring-shaped area downwards along the circumference of the raised area 401 to form the thinned area 102, where the ring-shaped area is spaced by a first preset distance from the edge of the raised area 401.

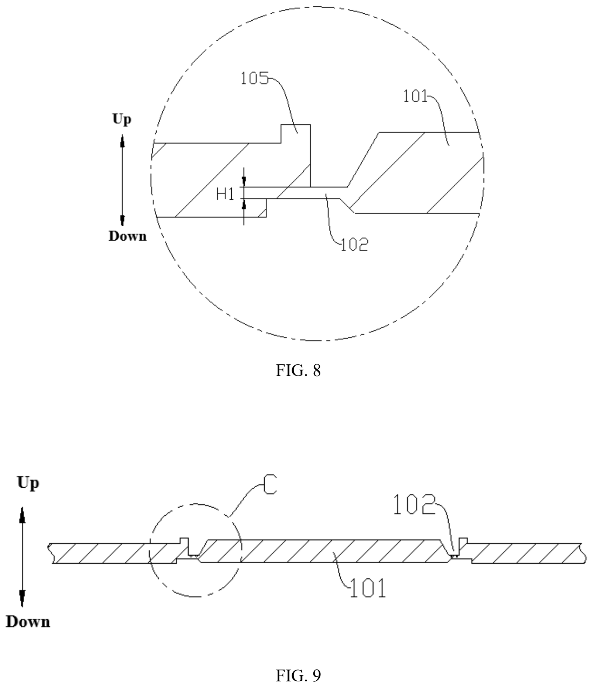

Furthermore, as shown in FIG. 7 and FIG. 8, the thinned area 102 is ring-shaped, and the distance between the outer diameter of the ring and the edge of the raised area 401 is the first preset distance. By pressing the ring-shaped area of the raised area 401 near the edge downwards, the ring-shaped area is thinned to form the thinned area 102. The pressed excess material flows towards the middle area of the raised area 401 that is surrounded by the ring-shaped area, to reduce product stress. After the thinned area 102 is formed downwards, the portion surrounded by the ring-shaped area on the raised area 401 forms the explosion-proof valve body 101. The space reserved by the first preset distance forms the boss 105, and the boss 105 can increase the strength of the cover plate 4. The downwards refers to a direction indicated by the "down" arrow in FIG. 7 and FIG. 8. Specifically, the thinned area 102 is stamped with a stamping mold.

Step S103: Process the plurality of spaced pits 104 in the thinned area 102 to destroy the crystal structure inside the material of the thinned area 102.

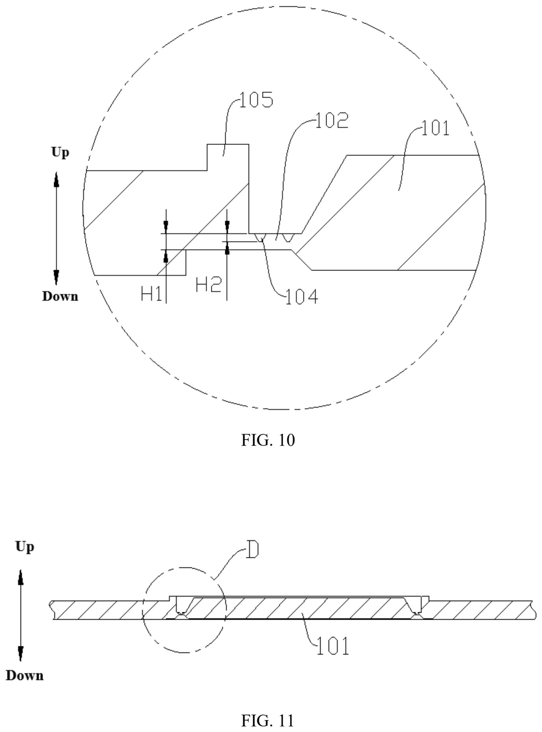

Furthermore, as shown in FIG. 9 and FIG. 10, the depth H2 of the pit 104 is less than the thickness H1 of the thinned area 102. By processing the pits 104 in the thinned area 102 to destroy the crystal structure inside the material, the effect of stress relief can be achieved. Moreover, the pits 104 can be stamped with a suitable punch, so the forming process is simple and easy to control, with high work efficiency. Optionally, along the width direction of the thinned area 102, two circles of spaced pits 104 are formed, each circle including a plurality of spaced pits 104.

Step S104: Press an indentation of a preset width along the circumference of the thinned area 102 to form the explosion rib 103, where in the pressing process, the excess material flows freely towards both sides of the explosion rib 103.

The preset width of the indentation is less than the width of the thinned area 102, and the indentation does not interfere with the formed pits 104. Optionally, the indentation is located between the two circles of pits 104. Both sides of the explosion rib 103 refer to two sides along the width direction of the explosion rib 103, specifically the area where the explosion-proof valve body 101 is located and the area away from the explosion-proof valve body 101 on the lower surface of the cover plate 4. By thinning the indentation area to form the explosion rib 103, the strength of the explosion rib 103 is lower than that of other portions on the cover plate 4, and the explosion rib 103 breaks when the received pressure reaches the explosion value, achieving the purpose of explosion of the explosion-proof valve 1 at the preset pressure value. In the pressing process of the explosion rib 103, the excess material flows freely towards both sides of the explosion rib 103, to reduce the molding pressure of the material. Specifically, the explosion rib 103 is formed by stamping.

By carrying out the above method steps, the explosion-proof valve 1 can be obtained. Compared to conventional steps such as stamping, cleaning, annealing, and welding, the processing method for the explosion-proof valve in this embodiment only requires stamping to form the explosion-proof valve 1, thereby reducing the forming process of the product and thus lowering costs. In the forming process of the explosion-proof valve, not only are the pits 104 formed to destroy the crystal structure of the material, but also sufficient flow space is provided for the excess material, thereby facilitating stress relief, preventing the thinned area 102 from breaking due to excessive stress, and improving the strength and stability of the explosion-proof valve 1.

In one embodiment, the distance of upward movement of the raised area 401 relative to other areas on the housing is H3, where H3 ranges from 0.3 mm to 2 mm. Furthermore, as shown in FIG. 6, the distance H3 is the height at which the first area is pressed upwards in step S101. If H3 is less than 0.3 mm, the height of upward movement of the first area is too small, so that in the subsequent stamping of the thinned area 102, the pits 104, and the explosion rib 103, the flow space for the excess material is insufficient, which is not conducive to stress relief; If H3 is greater than 2 mm, the height of upward movement of the first area is too large, so that the strength of the formed step and the strength of the boss 105 are low, which is not conducive to increasing the strength of the cover plate 4. Therefore, designing the distance H3 of upward movement of the raised area 401 relative to other areas on the housing to be 0.3 mm to 2 mm can ensure sufficient material flow space and sufficient strength of the boss 105, thereby increasing the stability of the overall structure.

Although the embodiments of the present application are described in conjunction with the drawings, a person skilled in the art may make various modifications and variations without departing from the spirit and scope of the present application, and such modifications and variations fall within the scope defined by the appended claims.

## Claims

1. An explosion-proof valve, comprising:
an explosion-proof valve body suitable for being arranged on a housing of a battery;
a thinned area surrounding a circumference of the explosion-proof valve body, wherein a thickness of the thinned area is less than a thickness of the explosion-proof valve body;
an explosion rib arranged in the thinned area, wherein a thickness of the explosion rib is less than the thickness of the thinned area, and the explosion rib is suitable for breaking at a preset pressure value; and
a plurality of pits spaced apart from each other in the thinned area and spaced apart from the explosion rib to reduce stress in the thinned area.

2. The explosion-proof valve as claimed in claim 1, wherein the thickness of the thinned area is H1, and a depth of the pit is H2, wherein H2≥1/2*H1.

3. The explosion-proof valve as claimed in claim 2, wherein the thickness H1 of the thinned area ranges from 0.2 mm to 0.5 mm.

4. The explosion-proof valve as claimed in claim 1, wherein the plurality of pits are symmetrically distributed on both sides of the explosion rib; and/or
a distance L1 between the two adjacent pits along the circumference of the explosion-proof valve body is 0.2 mm to 1 mm.

5. The explosion-proof valve as claimed in claim 1, wherein a circumferential surface of the explosion-proof valve body is an inclined surface at an angle to an axis of the explosion-proof valve; and/or
a width L2 of the thinned area ranges from 0.5 mm to 5 mm.

6. The explosion-proof valve as claimed in claim 1, wherein the thinned area further comprises a connecting portion, the connecting portion and the explosion rib are connected end to end, and the connecting portion surrounds the explosion-proof valve body, and a dimension L3 of the connecting portion along the circumference of the explosion-proof valve body is 2 mm to 20 mm.

7. The explosion-proof valve as claimed in any one of claims 1 to 6, wherein the explosion-proof valve further comprises a boss surrounding the circumference of the thinned area, and an upper surface of the boss is higher than an upper surface of the explosion-proof valve body and an upper surface of the thinned area.

8. A battery, comprising:
a housing with an open end;
an electrode set mounted in the housing; and
a cover plate arranged at the open end of the housing to close the housing, wherein the explosion-proof valve according to any one of claims 1 to 7 is configured on the cover plate.

9. A processing method for an explosion-proof valve, wherein the processing method is used to process the explosion-proof valve as claimed in any one of claims 1 to 7, and the processing method comprises:
selecting a first area on the housing, and shaping the first area upwards so that the first area protrudes upwards relative to other areas of the housing, to form a raised area;
pressing a ring-shaped area downwards along a circumference of the raised area to form the thinned area, wherein the ring-shaped area is spaced with a first preset distance from the edge of the raised area;
processing the plurality of spaced pits in the thinned area to destroy a crystal structure inside a material of the thinned area; and
pressing an indentation of a preset width along the circumference of the thinned area to form the explosion rib, wherein in the pressing process, the excess material flows freely towards both sides of the explosion rib.

10. The processing method for the explosion-proof valve as claimed in claim 9, wherein a distance of upward movement of the raised area relative to other areas on the housing is H3, wherein H3 ranges from 0.3 mm to 2 mm.
